(19) Europäisches Patentamt
European Patent Office
Office européen des brevets

(11) **EP 4 467 405 A1**

(12) **EUROPEAN PATENT APPLICATION**
published in accordance with Art. 153(4) EPC

(43) Date of publication:
**27.11.2024 Bulletin 2024/48**

(21) Application number: **22921007.5**

(22) Date of filing: **19.01.2022**

(51) International Patent Classification (IPC):
***B60W 30/045*** *(2012.01)*

(52) Cooperative Patent Classification (CPC):
**B60W 30/045**

(86) International application number:
**PCT/JP2022/001777**

(87) International publication number:
**WO 2023/139686 (27.07.2023 Gazette 2023/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NISSAN MOTOR CO., LTD.**
**Kanagawa 221-0023 (JP)**

(72) Inventors:
- **MAKITA Mitsuhiro**
  **Atsugi-shi, Kanagawa 243-0123 (JP)**
- **TAKAMATSU Atsushi**
  **Atsugi-shi, Kanagawa 243-0123 (JP)**

(74) Representative: **Grünecker Patent- und Rechtsanwälte**
**PartG mbB**
**Leopoldstraße 4**
**80802 München (DE)**

(54) **VEHICLE CONTROL METHOD AND VEHICLE CONTROL DEVICE**

(57) A vehicle control device (10) including: a sensor (12) configured to detect roll angular velocity of a vehicle body of a vehicle (1); and a controller (18) configured to decelerate the vehicle by controlling at least one of a driving force source to drive the vehicle and a braking device to brake the vehicle during a period in which an absolute value of roll angular acceleration of the vehicle body increases and/or accelerate the vehicle by controlling the driving force source during a period in which an absolute value of the roll angular acceleration decreases, based on the roll angular velocity detected by the sensor (12).

FIG. 1

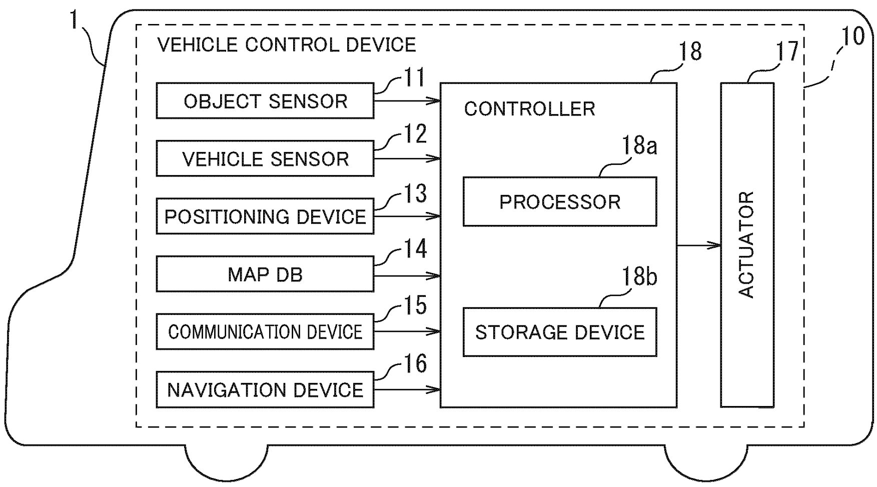




Processed by Luminess, 75001 PARIS (FR)

## Description

Technical Field

The present invention relates to a vehicle control method and a vehicle control device.

Background Art

In PTL 1 described below, a vehicle body attitude control device that sets a target pitch rate matching the magnitude of a roll rate of a vehicle body and generates a pitch moment by actuators individually installed to four wheels in such a manner that the pitch rate of the vehicle body comes close to the target pitch rate is described.

Citation List

Patent Literature

PTL1: JP 2013-046172 A

Summary of Invention

Technical Problem

Conventionally, in control of roll of a vehicle body, suppressing a change in roll attitude and vertical fluctuation of the vehicle body by use of hardware using support of the vehicle body from a sprung structure of the vehicle as control input has generally been performed. Therefore, suppressing a posture change of an occupant when a roll of the vehicle body occurs requires hardware dedicated for vehicle body attitude control.

An object of the present invention is to suppress a posture change of an occupant caused by a roll of a vehicle body, using a simple structure.

Solution to Problem

According to an aspect of the present invention, there is provided a vehicle control method including : detecting roll angular velocity of a vehicle body of a vehicle; and decelerating the vehicle during a period in which an absolute value of roll angular acceleration of the vehicle body increases and/or accelerating the vehicle during a period in which an absolute value of the roll angular acceleration decreases, based on the detected roll angular velocity.

Advantageous Effects of Invention

According to an aspect of the present invention, it is possible to suppress a posture change of an occupant caused by a roll of a vehicle body, using a simple structure.

The object and advantages of the invention will be realized and attained by means of the elements and combinations particularly pointed out in the claims. It is to be understood that both the foregoing general description and the following detailed description are exemplary and explanatory and are not restrictive of the invention.

Brief Description of Drawings

FIG. 1 is a schematic configuration diagram of an example of a vehicle control device of an embodiment;
FIG. 2 is an explanatory diagram of respective directions that are set for a vehicle;
FIGS. 3A, 3B, and 3C are a graph of temporal changes in lateral acceleration in a lateral transient motion and a positive acceleration applied by acceleration, a graph of temporal changes in the lateral acceleration in the lateral transient motion and a negative acceleration applied by deceleration, and an experimental result indicating a change in a roll attitude angle of an occupant in the case of FIGS. 3A and 3B, respectively;
FIGS. 4A, 4B, and 4C are a graph of temporal changes in lateral accelerations in a lateral transient motion, a graph of temporal changes in decelerations and accelerations applied by braking and driving of the vehicle, and a graph of temporal changes in the roll attitude angle of the occupant;
FIG. 5 is an explanatory diagram of lateral inertial acceleration of the occupant generated by roll of the vehicle body;

FIGS. 6A and 6B are a graph of temporal changes in roll angular acceleration and roll angular jerk and a graph of corrected longitudinal acceleration, respectively;
FIG. 7 is a flowchart of a first example of a vehicle control method of the embodiment;
FIGS. 8A and 8B are a graph of temporal changes in the roll angular acceleration and the roll angular velocity and a graph of the corrected longitudinal acceleration, respectively; and
FIG. 9 is a flowchart of a second example of the vehicle control method of the embodiment.

Description of Embodiments

(Configuration)

An embodiment will be described below with reference to the accompanying drawings. Note that "longitudinal acceleration" herein includes not only an increase rate of vehicle speed in the advancing direction of a vehicle but also a decrease rate of the speed (that is, deceleration) . In particular, it is assumed that a sign of acceleration when the vehicle speed increases is positive and the sign of acceleration when the vehicle speed decreases is negative. In addition, "lateral acceleration" is a concept including acceleration generated along one direction in the vehicle width direction (one of the leftward direction and the rightward direction with respect to the advancing direction of the vehicle) and acceleration generated along the other direction in the vehicle width direction (the other of the leftward direction and the rightward direction) . For the convenience of description, a sign of the "lateral acceleration" is defined to be positive when the lateral acceleration points leftward with respect to the advancing direction of the vehicle and negative when the lateral acceleration points rightward with respect to the advancing direction of the vehicle.

FIG. 1 is a schematic configuration diagram of an example of a vehicle control device of the embodiment. A vehicle 1 includes a vehicle control device 10 configured to control travel of the vehicle 1. Travel control by the vehicle control device 10 includes autonomous driving control to cause the vehicle 1 to self-drive without involvement of a driver, based on a travel environment around the vehicle 1 and driving assistance control to assist driving of the vehicle 1 by the driver by controlling at least one of drive, braking, and steering of the vehicle 1. The driving assistance control may be, for example, self-steering, self-braking, preceding vehicle following control, constant speed travel control, lane keeping control, merging assistance control, or the like.

The vehicle control device 10 includes object sensors 11, vehicle sensors 12, a positioning device 13, a map database (map DB) 14, a communication device 15, a navigation device 16, actuators 17, and a controller 18.

The object sensors 11 include a plurality of object detection sensors of different types that are mounted on the vehicle 1 and detect objects around the vehicle 1, such as a laser radar, a millimeter-wave radar, a camera, and a light detection and ranging or laser imaging detection and ranging (LIDAR) .

The vehicle sensors 12 are mounted on the vehicle 1 and detect various information (vehicle signals) that can be acquired from the vehicle 1. For example, the vehicle sensors 12 include a vehicle speed sensor to detect vehicle speed of the vehicle 1, wheel speed sensors to detect rotational speeds of respective tires of the vehicle 1, a triaxial acceleration sensor to detect acceleration and deceleration in three axial directions of the vehicle 1, a yaw rate sensor to detect yaw angular velocity (yaw rate) of a vehicle body, and a roll rate sensor to detect roll angular velocity of the vehicle body. Note that the detection includes estimation. For example, the detection includes estimation of the roll angular velocity of the vehicle body by using a sensor to measure lateral acceleration of the vehicle in place of the roll rate sensor. Specifically, the roll angular velocity of the vehicle body can be estimated by focusing on a proportional relationship between the lateral acceleration and the roll angular velocity.

In addition, in the vehicle sensors 12, for example, an accelerator sensor to detect accelerator opening of the vehicle, a brake sensor to detect a brake operation amount by the driver, a turning angle sensor to detect a turning angle of steered wheels, and a steering angle sensor to detect a steering angle $\theta_s$ of a steering wheel are included, and information about steering angular velocity $\omega_s$ of the steering wheel can also be acquired from the vehicle sensors 12.

The positioning device 13 includes a global navigation satellite system (GNSS) receiver and, by receiving radio waves from a plurality of navigation satellites, measures a current position of the vehicle 1. The GNSS receiver may be, for example, a global positioning system (GPS) receiver or the like. The positioning device 13 may be, for example, an inertial navigation device.

The map database 14 stores road map data. For example, the map database 14 may store high-definition map data that are suitable as map information for self-driving. The map database 14 may store map data for navigation.

The communication device 15 performs wireless communication with a communication device external to the vehicle 1. A communication method used by the communication device 15 may be, for example, wireless communication via a public mobile telephone network, vehicle-to-vehicle communication, road-to-vehicle communication, or satellite communication.

The navigation device 16 recognizes a current position of the vehicle, using the positioning device 13 and acquires map information at the current position from the map database 14. The navigation device 16 sets a travel route to a destination that an occupant inputs and performs route guidance for the occupant in accordance with the travel route. The navigation device 16 also outputs information about the set travel route to the controller 18. When performing autonomous driving control, the controller 18 causes the vehicle 1 to self-drive in such a way that the vehicle 1 travels along the travel route set by the navigation device 16.

The actuators 17 are devices that perform operation in such a manner that the vehicle 1 is brought into a desired motion state, in accordance with a control signal from the controller 18. The actuators 17 mainly include a drive system actuator to adjust acceleration in the longitudinal direction of the vehicle 1 and a steering system actuator to adjust turning motion of the vehicle 1.

When the vehicle 1 has an engine mounted thereon as a traveling drive source, the drive system actuator may include a throttle valve to adjust feed volume (throttle opening) of air to the engine and a friction brake or the like to adjust a braking force to be given to wheels of the vehicle 1.

When the vehicle 1 has a motor mounted thereon as the traveling drive source (when the vehicle 1 is a hybrid vehicle or an electric vehicle), the drive system actuator may include a power adjustment device (an inverter, a converter, or the like) to adjust power to be supplied to the motor. In this case, a deceleration function in the drive system actuator may be achieved by regenerative operation (regenerative brake) in place of or in addition to the friction brake.

On the other hand, the steering system actuator may include an assist motor to control steering torque in an electric power steering system or a turning motor to control turning torque in a steer-by-wire system.

The controller 18 is an electronic control unit (ECU) that performs travel control of the vehicle 1. The controller 18 includes a processor 18a and peripheral components, such as a storage device 18b. The processor 18a may be, for example, a CPU or an MPU.

The storage device 18b may include a semiconductor storage device, a magnetic storage device, an optical storage device, and the like. The storage device 18b may include registers, a cache memory, and a memory, such as a ROM or a RAM, that is used as a main storage device.

Functions of the controller 18, which will be described below, are achieved by, for example, the processor 18a executing computer programs stored in the storage device 18b.

Note that the controller 18 may be formed using dedicated hardware for performing information processing that will be described below. For example, the controller 18 may include a functional logic circuit that is implemented in a general-purpose semiconductor integrated circuit. For example, the controller 18 may include a PLD, such as an FPGA, and the like.

Next, a control method of the vehicle 1 performed by the vehicle control device 10 of the embodiment will be described. For the convenience of description, respective directions and angles in the vehicle 1 that are used herein are defined as illustrated in FIG. 2. A reference sign O indicates an occupant who is on-board the vehicle 1, and a reference sign S indicates a vehicle seat on which the occupant O is seated. The occupant O may be a driver or a passenger. The vehicle seat S includes at least a seat back Sb and a seat cushion Sc.

The "vertical direction", the "longitudinal direction", and the "lateral direction" are referred to as a $\zeta$-axis direction, a $\xi$-axis direction, and a $\eta$-axis direction, respectively. Further, an angle that an axis aligned with the trunk of the occupant O and the vertical axis make in the $\zeta$-$\eta$ plane with a direction pointing from the $\zeta$-axis to the $\eta$-axis defined as the positive direction is referred to as a "roll attitude angle $\Phi$", and an angle that the axis aligned with the trunk of the occupant O and the vertical axis make in the $\zeta$-$\xi$ plane with a direction pointing from the $\zeta$-axis to the $\xi$-axis defined as the positive direction is referred to as a "pitch attitude angle $\Psi$".

The vehicle control device 10 sets basic longitudinal acceleration Ab that is to be generated in the vehicle 1 according to an operation amount of an accelerator pedal by the driver or a required driving force set by the autonomous driving control or the driving assistance control. The basic longitudinal acceleration Ab is equivalent to a target value of acceleration (a target value matching a required driving force) to achieve a translational movement intended for the vehicle 1 to perform according to a travel scene.

The vehicle control device 10 changes a pressing load of the occupant O on the seat back Sb of the vehicle seat S by correcting the basic longitudinal acceleration Ab and applying acceleration that decelerates or accelerates the vehicle 1. Through this operation, the vehicle control device 10 improves comfort of the occupant on board the vehicle by reducing body sway of the occupant O with respect to a roll of the vehicle body.

In general, in order to improve comfort of the occupant O on board the vehicle, it is only required to reduce body sway of the occupant O with respect to motion of the vehicle 1. For example, motion sickness is considered to be caused by a mismatch occurring between a motion sensed by a motion sensory organ and motion recognition by sight or the like of the occupant, due to a motion of the body and the head of the occupant (motion conflict theory) .

In order to suppress the body sway, adjustment of relative motion between the body of the occupant O and the seat back Sb is an efficient way. For example, since an increase in the pressing load of the occupant O on the seat back Sb enables a posture change of the occupant O with respect to a roll of the vehicle 1 to be suppressed, an effect of reduction in motion sickness can be expected.

As a means for suppressing a posture change of the occupant O by increasing the pressing load of the occupant O on the seat back Sb, applying positive longitudinal acceleration to the vehicle 1 is conceivable.

FIGS. 3A to 3C illustrate a simulation result of a maximum amplitude of the roll attitude angle $\Phi$ of the occupant O when a longitudinal acceleration is applied to a vehicle that is performing a transient motion in the lateral direction. In this simulation, as illustrated in FIGS. 3A and 3B, while a lateral acceleration shaped in a sine wave with an amplitude of 1.5 $m/s^2$ is generated by a transient motion, such as a lane change, accelerations of $\pm 0.25\ m/s^2$ that are accelerations with an amplitude at the boundary of whether or not the acceleration is recognizable by the occupant O (hereinafter, sometimes referred to as "threshold acceleration") are also applied in the longitudinal direction.

In general, it is known that a lower limit of acceleration (hereinafter, referred to as "standard sensory threshold") that is recognizable by a person in the front-rear direction of the body in a static environment at a laboratory level is a value in a range of approximately 0.05 to approximately 0.1 $m/s^2$. However, when the occupant O is exposed to external factors, such as vibration, in a vehicle traveling environment, the threshold acceleration, which is acceleration with an amplitude at the boundary of whether or not the acceleration is recognizable by the occupant O, is a value in a range of approximately 0.2 to approximately 0.3 $m/s^2$ (approximately 0.02 to 0.03 G) . Even when a longitudinal acceleration of this level of magnitude is applied, it is difficult for the occupant O to recognize the acceleration as acceleration or deceleration.

In contrast, a distinct difference as illustrated in FIG. 3C occurs in motion of the body of the occupant O, and when positive longitudinal acceleration (0.25 $m/s^2$) is applied, the roll attitude angle $\Phi$ of the occupant O significantly becomes small, compared with when negative longitudinal acceleration (-0.25 $m/s^2$) is applied. It is considered that this effect is caused by increase and decrease in friction due to change in the pressing load of the occupant O on the seat back Sb. This result reveals that an acceleration range where acceleration or deceleration in the longitudinal direction enables a posture change of the occupant O to be reduced without inducing discomfort or motion sickness exists.

Although based on the result, it is also conceivable that the posture change of the occupant O is reduced by causing the vehicle to continuously accelerate during a transient motion in the lateral direction and thereby constantly pressing the body of the occupant against the seat back Sb, applying acceleration in this way causes a speed change departing from a vehicle motion intended by the driver or a vehicle motion intended by the autonomous driving control or the driving assistance control to occur. Therefore, it is preferable to apply acceleration and deceleration of the same order of magnitude as the threshold acceleration in combination in such a manner as to suppress a posture change of the occupant and not to influence the intention of the vehicle motion.

FIGS. 4A to 4C illustrate a simulation result of the maximum amplitude of the roll attitude angle $\Phi$ of the occupant O in the case where an occupant model of an inverted pendulum type is used and when the vehicle 1 performs a predetermined transient motion in the lateral direction (lane change), rigidity against a posture change of the occupant O in the roll direction is increased and decreased, using the threshold acceleration ($\pm 0.025$ G) in the longitudinal direction.

By performing optimization calculation by setting a driving intention in such a way that in the lane change, the vehicle 1 is caused to move to an adjacent lane (with a lateral movement amount defined) and return to a straight travel after a certain period of time (in this case, after 4 seconds) and vehicle speed at the termination of the lane change is the same as an initial speed, an optimum solution is calculated in each of a case where the threshold acceleration is applied and a case where the threshold acceleration is not applied.

In the case of lane change, two transient motions in which the direction of lateral acceleration is reversed occur in respective ones of a phase where the longitudinal direction of the vehicle body is directed to the adjacent lane (hereinafter, referred to as "movement phase I") and a phase where the longitudinal direction of the vehicle body is returned (hereinafter, referred to as "return phase II") . It is found that with respect to each transient motion, when the vehicle 1 is decelerated in a section in which the absolute value of acceleration increases and the vehicle 1 is accelerated in a section in which the absolute value of acceleration decreases, change in the roll attitude angle $\Phi$ of the body of the occupant O is minimized. In the simulation result, the change in the roll attitude angle $\Phi$ of the occupant O can be reduced by 17 , compared with a case where no longitudinal acceleration is applied to the vehicle 1.

In the present invention, using a suppressing effect of the change in the roll attitude angle $\Phi$ of the occupant O through application of longitudinal acceleration as described above, the change in the roll attitude angle $\Phi$ of the occupant O associated with a vehicle motion due to a disturbance is suppressed.

Disturbances causing a vehicle motion mainly include a road surface disturbance and an aerodynamic disturbance due to a side wind or the like, and the vehicle body is put into motion by such disturbances even without the driver performing any operation. Although the magnitude of the motion is small, it is considered that since the vehicle body continuously moves during travel, comfort of the occupant is impaired.

Such a motion of the vehicle body due to a disturbance occurs in the vertical direction, the longitudinal direction, and the lateral direction, and the motion is applied to the occupant as inertial acceleration. In the roll that is a motion of the vehicle body in the lateral direction among such motions, a component caused by a planar motion of the vehicle and a component generated by a motion of the vehicle body in the roll direction are included.

FIG. 5 is an explanatory diagram of lateral inertial acceleration of the occupant generated by a roll of the vehicle body. Although the lateral inertial acceleration applied to the occupant is generated as a sum obtained by adding a lateral inertial acceleration ($-a_{Roll}$) caused by the roll to a lateral inertial acceleration caused by a planar motion of the vehicle, the lateral inertial acceleration ($-a_{Roll}$) caused by the roll among the lateral inertial accelerations is generated by the vehicle body rotating in the roll direction about an imaginary rotation center Pc, which is referred to as a roll center of the vehicle body, in the case of a minute motion at a level equivalent to a roll due to a disturbance. For this reason, a quantity obtained by multiplying height h from the roll center Pc to a seating point Ps of the occupant O by roll angular acceleration of the vehicle body (a second derivative of a roll angle $\Phi_V$ of the vehicle body) serves as the lateral acceleration ($-a_{Roll}$) that is caused by a roll motion of the vehicle body and applied to the seating point Ps.

Thus, when a posture change of the body of the occupant O occurring due to lateral acceleration caused by a roll motion of the vehicle body can be controlled using longitudinal acceleration, it is possible to lead to a reduction in discomfort due to roll that constantly occurs during travel.

A setting example of the longitudinal acceleration will be described with reference to FIGS. 6A and 6B. FIGS. 6A and 6B are a graph of temporal changes in roll angular acceleration and roll angular jerk of a roll motion due to a roll of the vehicle body and a graph of longitudinal acceleration to be applied to the vehicle body to suppress a posture change of the occupant O (hereinafter, referred to as "corrected longitudinal acceleration Ac"), respectively.

In a roll motion due to a roll of the vehicle body, there exist a first phase I-1 where both signs of the roll angular acceleration and the roll angular jerk (a first derivative of the roll angular acceleration) are positive, a second phase I-2 where the sign of the roll angular acceleration is positive and the sign of the roll angular jerk is negative, a third phase II-1 where both the signs of the roll angular acceleration and the roll angular jerk are negative, and a fourth phase II-2 where the sign of the roll angular acceleration is negative and the sign of the roll angular jerk is positive. The absolute value of the roll angular acceleration of the vehicle body increases in the first phase I-1 and the third phase II-1 and decreases in the second phase I-2 and the fourth phase II-2.

Thus, by multiplying the roll angular acceleration of the vehicle body by the roll angular jerk, which is a change rate of the roll angular acceleration, and calculating a sign of a product of the roll angular acceleration and the roll angular jerk, whether the absolute value of the roll angular acceleration of the vehicle body increases (that is, whether a negative longitudinal acceleration is to be applied) or the absolute value of the roll angular acceleration decreases (that is, whether a positive longitudinal acceleration is to be applied) can be determined.

Note that when a sensor capable of directly detecting the roll angular acceleration and the roll angular jerk is available, the physical quantities may be directly detected by the sensor or the roll angular acceleration and the roll angular jerk may be detected based on a detected value or an estimated value from the roll rate sensor in the vehicle sensors 12. For example, the roll angular acceleration may be calculated by differentiating a detected value or an estimated value from the roll rate sensor in the vehicle sensors 12, and the roll angular jerk may be calculated by differentiating the roll angular acceleration.

For example, the controller 18 may set the corrected longitudinal acceleration Ac, based on the equation (1) below:

$$Ac = -Sgn[\text{roll angular acceleration} \times \text{roll angular jerk}] \times |a| \quad . . . \quad (1)$$

where Sgn[x] is a sign function where when a variable x>0, Sgn[x]=+1, when the variable x=0, Sgn[x]=0, and when the variable x<0, Sgn[x]=-1 and |a| is a prescribed set acceleration amount. For example, the set acceleration amount |a| is preferably set to a value in a range of approximately 0.02 to approximately 0.03 G, which is the threshold acceleration. Since length of a period during which a negative corrected longitudinal acceleration Ac is applied and length of a period during which a positive corrected longitudinal acceleration Ac is applied are approximately the same, an average of speed change is substantially 0 and the application of the corrected longitudinal acceleration Ac does not hinder the intention of the vehicle motion.

The controller 18 calculates target longitudinal acceleration At by adding the corrected longitudinal acceleration Ac to the basic longitudinal acceleration Ab. The controller 18 calculates operation amounts of the actuators 17 in such a way that actual longitudinal acceleration of the vehicle 1 comes close to the target longitudinal acceleration At and controls the actuators 17, based on the operation amounts. More specifically, the controller 18 controls the throttle opening, motor output, or the friction brake in such a manner that the actual longitudinal acceleration meets the target longitudinal acceleration At.

In particular, when the vehicle 1 is an electric vehicle, the controller 18 operates the power adjustment device in such a manner as to provide the motor with positive torque when the magnitude of the target longitudinal acceleration At is increased (the vehicle 1 is accelerated). In contrast, when the magnitude of the target longitudinal acceleration At is decreased (the vehicle 1 is decelerated), the controller 18 operates the power adjustment device in such a manner as to provide the motor with negative torque, increases a braking force by the friction brake, or executes both of the operations.

Note that although in the setting examples of the longitudinal acceleration illustrated in FIG. 6B and FIG. 8B, which will be described later, the vehicle 1 is decelerated during a period in which the absolute value of the roll angular acceleration increases and subsequently the vehicle 1 is accelerated during a period in which the absolute value of the roll angular acceleration decreases, it is not necessarily required to execute both the deceleration and the acceleration. That is, when the vehicle 1 is either decelerated during a period in which the absolute value of the roll angular acceleration increases or accelerated during a period in which the absolute value of the roll angular acceleration decreases, an effect of reducing change in the roll attitude angle Φ of the occupant O can be expected to be achieved.

(Operation)

FIG. 7 is a flowchart of a first example of the vehicle control method of the embodiment.

In step S1, the controller 18 detects roll angular acceleration of the vehicle body of the vehicle 1, based on an output signal from the vehicle sensors 12. For example, the controller 18 may calculate the roll angular acceleration of the vehicle body by differentiating a detected value from the roll rate sensor in the vehicle sensors 12.

In step S2, the controller 18 calculates roll angular jerk by differentiating the roll angular acceleration.

In step S3, the controller 18 calculates corrected longitudinal acceleration Ac by calculating a sign of a product obtained by multiplying the roll angular acceleration by the roll angular jerk and, after reversing the calculated sign, multiplying set acceleration amount |a| by the reversed sign.

In step S4, the controller 18 performs high-pass filter processing on the corrected longitudinal acceleration Ac. Stationary motion of the vehicle 1 is removed by the high-pass filter processing, and the corrected longitudinal acceleration Ac is generated only when the vehicle 1 is in a transient motion state.

In step S5, the controller 18 performs low-pass filter processing on a signal after the high-pass filter processing. By suppressing a change in deceleration or acceleration (that is, jerk) in the longitudinal direction to less than or equal to a set value through the low-pass filter processing, influence on motion sense and perception of the occupant associated with occurrence of jerk is suppressed.

In step S6, the controller 18 calculates target longitudinal acceleration At by adding the corrected longitudinal acceleration Ac to the basic longitudinal acceleration Ab. The controller 18 outputs a control signal to the actuators 17 in such a way that actual longitudinal acceleration of the vehicle 1 comes close to the target longitudinal acceleration At. Subsequently, the process terminates.

(Variation)

Another setting example of the longitudinal acceleration will be described with reference to FIGS. 8A and 8B. When the roll angular acceleration and the roll angular jerk are calculated by differentiating a detected value from the roll rate sensor, noise components increase in the calculation process and precision is likely to be reduced.

Thus, the controller 18 of a variation determines, from a detected value from the roll rate sensor (that is, information about roll angular velocity), a period in which the absolute value of the roll angular acceleration of the vehicle body increases (that is, the first phase I-1 and the third phase II-1) and a period in which the absolute value of the roll angular acceleration of the vehicle body decreases (that is, the second phase I-2 and the fourth phase II-2) .

Roll motion of the vehicle body due to disturbance can be considered to be basically free vibration with the roll center Pc as a rotation center. In the case of free vibration, a main vibration component is a motion with a period close to a natural period (resonant period) of the vehicle body.

Thus, the controller 18 calculates, based on a signal waveform of a roll angular velocity signal that the roll rate sensor outputs, a natural period of a roll angle of the vehicle body (hereinafter, referred to as "vehicle body roll angle natural period T") and a phase of the roll angular acceleration.

For example, the controller 18 may determine a peak point pv of the roll angular velocity signal and calculate, based on the peak point pv, a time at which the phase of the roll angular acceleration coincides with a reference point (for example, a point at which the phase is equal to 0 deg) and the vehicle body roll angle natural period T. The controller 18 may generate an acceleration pattern of the corrected longitudinal acceleration Ac in which the vehicle 1 decelerates in a first quadrant and a third quadrant of the roll angular acceleration (that is, the first phase I-1 and the third phase II-1) and accelerates in a second quadrant and a fourth quadrant of the roll angular acceleration (that is, the second phase I-2 and the fourth phase II-2) .

FIGS. 8A and 8B are a graph of temporal changes in the roll angular acceleration and the roll angular velocity of a roll motion due to a roll of the vehicle body and a graph of a temporal change in the acceleration pattern of the corrected longitudinal acceleration Ac, respectively.

The controller 18 detects an arrival of the peak point pv of the roll angular velocity signal output from the roll rate sensor and synchronizes, based on a time at which the peak point pv arrives and the vehicle body roll angle natural period T, control timings in accordance with the acceleration pattern in FIG. 8B with the phase of vehicle body angular velocity in FIG. 8A. The controller 18 calculates target longitudinal acceleration At by adding the corrected longitudinal acceleration Ac in accordance with the acceleration pattern to the basic longitudinal acceleration Ab and controls the actuators 17 in such a way that actual longitudinal acceleration of the vehicle 1 comes close to the target longitudinal acceleration At.

According to the control as described above, corrected longitudinal acceleration Ac similar to the corrected longitudinal acceleration Ac described with reference to FIGS. 6A and 6B can be set.

FIG. 9 is a flowchart of a second example of the vehicle control method of the embodiment.

In step S10, the controller 18 acquires a roll angular velocity signal of the vehicle body of the vehicle 1, from the roll rate sensor in the vehicle sensors 12. The detected signal is stored in the storage device 18b as a signal data string. By, for example, updating (overwriting) an old signal that was detected a predetermined period before with a newly acquired signal, a signal data string of a predetermined period may be constantly retained. By retaining a signal data string in the storage device 18b even after the vehicle 1 stops and power is turned off, the data string can be used even immediately after the power is turned on again and the vehicle 1 starts traveling.

In step S11, the controller 18 calculates a vehicle body roll angle natural period T from a data string of a roll angular velocity signal retained in the storage device 18b. For example, the controller 18 may, by performing frequency analysis on the signal data string, determine the vehicle body roll angle natural period T from peaks of the signal data string. The controller 18 generates, based on the vehicle body roll angle natural period T, an acceleration pattern of the corrected longitudinal acceleration Ac illustrated in FIG. 8B.

In step S12, the controller 18 determines, based on a roll angular velocity signal currently acquired, whether or not a peak point pv of the roll angular velocity signal has arrived. When a peak point pv has arrived (step S12: Y), the process proceeds to step S13. When no peak point pv has arrived (step S12: N), the process returns to step S10.

In step S13, the controller 18 determines a time at which reproduction of the acceleration pattern generated in step S11 is started, based on a time at which the peak point pv has arrived, and reproduces the acceleration pattern from the determined time. The controller 18 calculates target longitudinal acceleration At by adding the corrected longitudinal acceleration Ac in accordance with the acceleration pattern to the basic longitudinal acceleration Ab and outputs a control signal to the actuators 17 in such a way that actual longitudinal acceleration of the vehicle 1 comes close to the target longitudinal acceleration At.

The controller 18, even during a period in which the controller 18 continues control of acceleration of the vehicle 1 in accordance with the acceleration pattern generated in step S11 (hereinafter, sometimes referred to as "control period"), constantly acquires a roll angular velocity signal in step S14 and continues updating the signal data string retained in the storage device 18b.

In step S15, the controller 18 determines whether or not the control period has ended. When the control period has ended (step S15: Y), the process proceeds to step S16. When the control period has not ended (step S15: N), the process returns to step S13.

In step S16, the controller 18 determines whether or not the vehicle 1 has stopped. When the vehicle 1 has not stopped (step S16: N), the process returns to step S10. In this case, the controller 18 determines the vehicle body roll angle natural period T again and regenerates a new acceleration pattern from the latest natural period information. Because of this configuration, even when a factor influencing the vehicle body roll angle natural period T, such as a change in a loading condition of the occupant O or the like and control of suspension including a damper and the like, exists, the controller 18 can cope with the factor.

On the other hand, when the vehicle 1 has stopped (step S16: Y), the process terminates.

(Advantageous Effects of Embodiment)

(1) The vehicle sensors 12 detect roll angular velocity of the vehicle body of the vehicle 1. The controller 18 decelerates the vehicle 1 during a period in which the absolute value of the roll angular acceleration of the vehicle body increases and/or accelerates the vehicle 1 during a period in which the absolute value of the roll angular acceleration decreases, based on the detected roll angular velocity.

Because of this configuration, it is possible to suppress a posture change of the occupant O caused by occurrence of inertial acceleration due to a roll generated by disturbance, such as an unevenness of a road and side wind, to the vehicle body.

In particular, since surface pressure of the body of the occupant O on the seat back Sb can be reduced by applying deceleration to the vehicle 1 in such a manner that the deceleration is exerted in the front-rear direction of the body trunk of the occupant O in a first half of a process of a transient roll motion in which the absolute value of the roll angular acceleration of the vehicle body increases, constraint on motion of the body from the seat back Sb decreases. Therefore, it is possible to reduce the movement of occupant O from being forced to follow the roll motion of the vehicle body, as a result of which posture change of the occupant O can be suppressed.

In addition, since surface pressure of the body of the occupant O on the seat back Sb can be increased by applying acceleration to the vehicle in such a manner that the acceleration is exerted in the front-rear direction of the body trunk of the occupant O in a last half of a process of a transient roll motion in which the absolute value of the roll angular acceleration of the vehicle body decreases, constraint on motion of the body from the seat back Sb increases. Therefore, by making motion of the body of the occupant O, which is moving behind roll motion of the vehicle body, more likely to follow the seat, the posture change of the occupant O can be suppressed as a result.

(2) The controller 18 may, after decelerating the vehicle 1 during a period in which the absolute value of the roll angular acceleration increases, accelerate the vehicle 1 during a period in which the absolute value of the roll angular acceleration decreases.

Because of this configuration, it is possible to suppress a posture change of the occupant O caused by occurrence of inertial acceleration due to a roll generated by disturbance without hindering an intention for a vehicle motion by the driver or an intention by the autonomous driving control or the driving assistance control.

(3) The controller 18 may determine that the absolute value of the roll angular acceleration increases when the sign of a product obtained by multiplying the roll angular jerk by the roll angular acceleration of the vehicle body is positive and may determine that the absolute value of the roll angular acceleration decreases when the sign of the product is negative.

Because of this configuration, a deceleration period and an acceleration period for suppressing a posture change of the occupant O can be determined.

(4) A period in which the absolute value of the roll angular acceleration increases may be determined based on a time at which detected roll angular velocity reaches a peak and a roll resonant period of the vehicle body. In addition, a period in which the absolute value of the roll angular acceleration decreases may be determined based on a time at which the detected roll angular velocity reaches a peak and the roll resonant period of the vehicle body.

Because of this configuration, a deceleration period and an acceleration period for suppressing a posture change of the occupant O can be determined even when a sensor capable of directly detecting the roll angular acceleration and the roll angular jerk is not available. In addition, since a deceleration period and an acceleration period can be determined without differentiating the roll angular velocity, an increase in noise due to differentiation and a reduction in calculation precision can be avoided.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

Reference Signs List

1 Vehicle
10 Vehicle control device
11 Object sensor
12 Vehicle sensor
13 Positioning device
14 Map database
15 Communication device
16 Navigation device
17 Actuator
18 Controller
18a Processor
18b Storage device
O Occupant
S Vehicle seat
Sb Seat back
Sc Seat cushion

## Claims

**1.** A vehicle control method comprising:

detecting roll angular velocity of a vehicle body of a vehicle; and
decelerating the vehicle during a period in which an absolute value of roll angular acceleration of the vehicle body increases and/or accelerating the vehicle during a period in which an absolute value of the roll angular acceleration decreases, based on the detected roll angular velocity.

**2.** The vehicle control method according to claim 1, wherein the vehicle control method, after decelerating the vehicle during a period in which an absolute value of the roll angular acceleration increases, accelerates the vehicle during a period in which an absolute value of the roll angular acceleration decreases.

**3.** The vehicle control method according to claim 1 or 2, wherein the vehicle control method determines that an absolute value of the roll angular acceleration increases when a sign of a product obtained by multiplying roll angular jerk by the roll angular acceleration of the vehicle body is positive and determines that an absolute value of the roll angular acceleration decreases when a sign of the product is negative.

**4.** The vehicle control method according to any one of claims 1 to 3, wherein the vehicle control method determines a period in which an absolute value of the roll angular acceleration increases, based on a time at which the detected roll angular velocity reaches a peak and a roll resonant period of the vehicle body.

**5.** The vehicle control method according to any one of claims 1 to 4, wherein the vehicle control method determines a period in which an absolute value of the roll angular acceleration decreases, based on a time at which the detected roll angular velocity reaches a peak and a roll resonant period of the vehicle body.

**6.** A vehicle control device comprising:

a sensor configured to detect roll angular velocity of a vehicle body of a vehicle; and
a controller configured to decelerate the vehicle by controlling at least one of a driving force source to drive the vehicle and a braking device to brake the vehicle during a period in which an absolute value of roll angular acceleration of the vehicle body increases and/or accelerate the vehicle by controlling the driving force source during a period in which an absolute value of the roll angular acceleration decreases, based on the roll angular velocity detected by the sensor.

FIG. 1

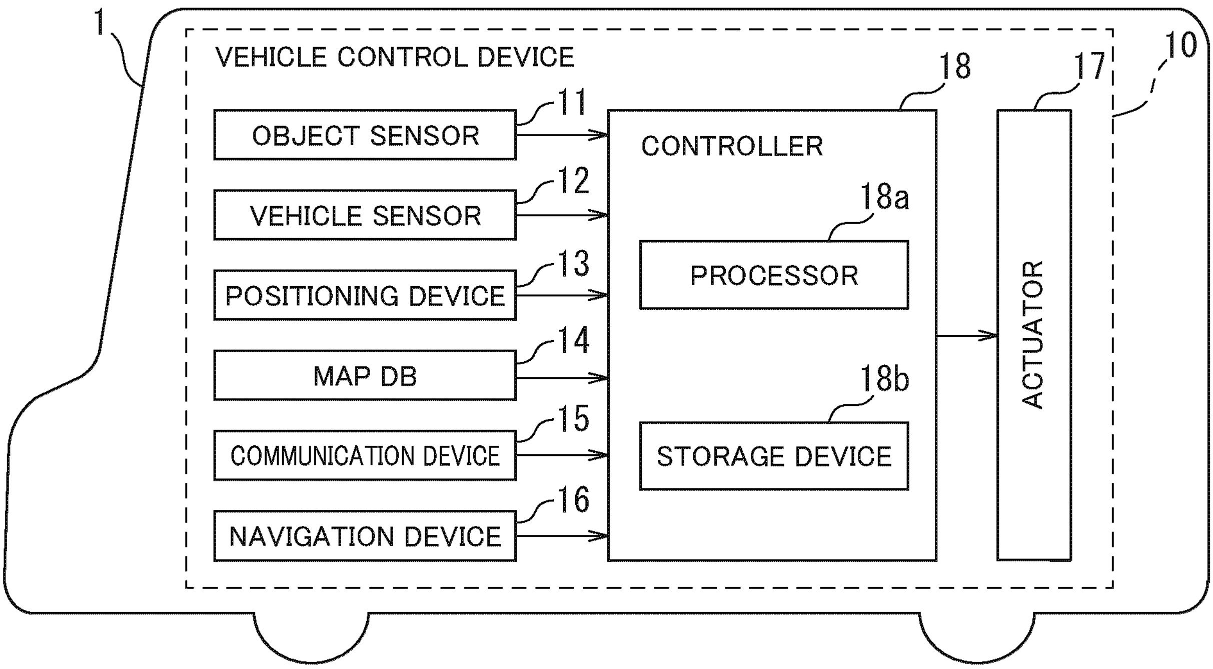
1
VEHICLE CONTROL DEVICE
10
11
OBJECT SENSOR
12
VEHICLE SENSOR
13
POSITIONING DEVICE
14
MAP DB
15
COMMUNICATION DEVICE
16
NAVIGATION DEVICE
18
CONTROLLER
18a
PROCESSOR
18b
STORAGE DEVICE
17
ACTUATOR

FIG. 2

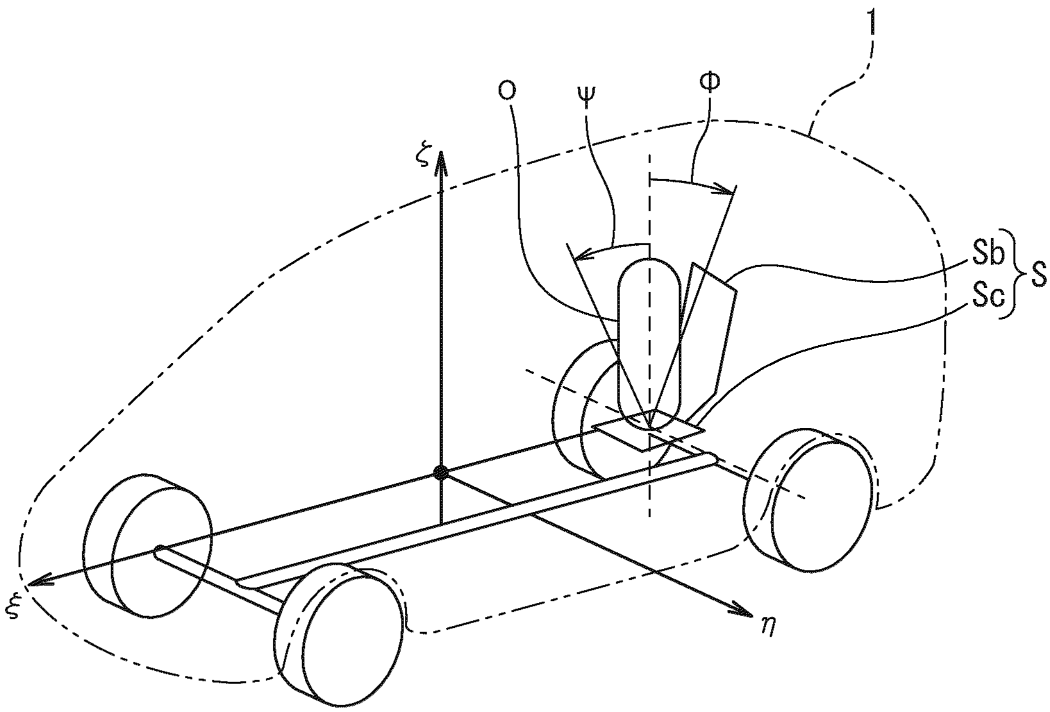
1
O
Ψ
Φ
ζ
Sb
Sc
S
ξ
η

FIG. 3A

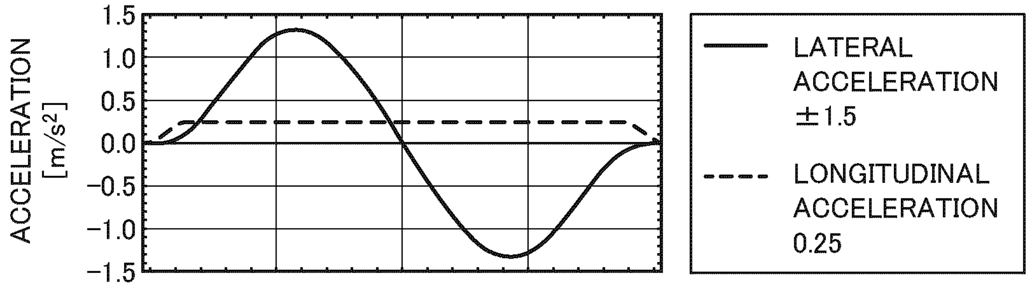


FIG. 3B

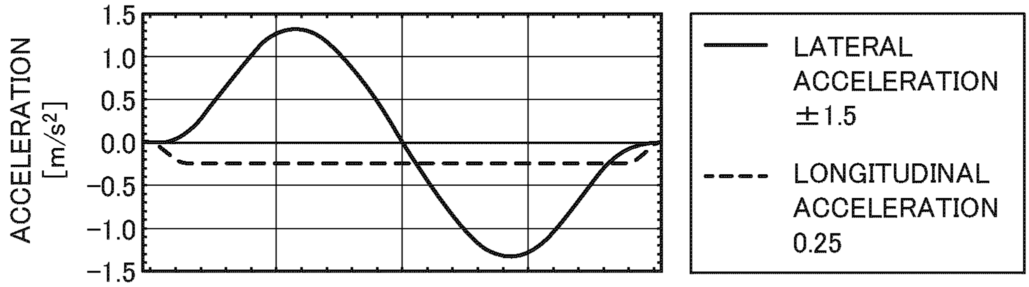


FIG. 3C

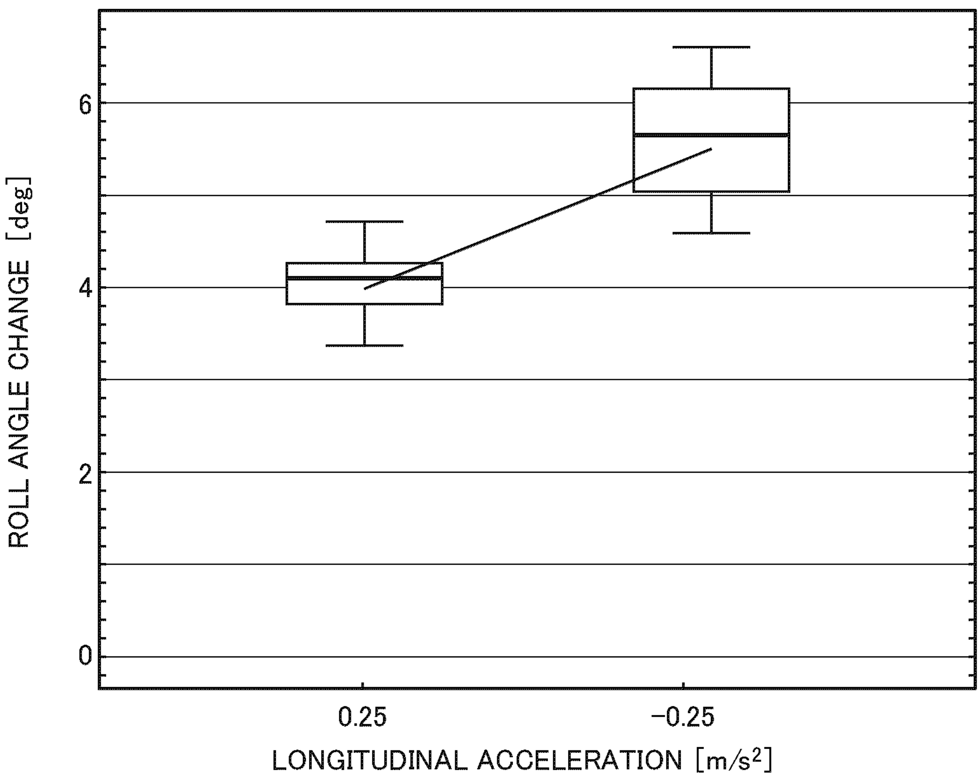

FIG. 4A

FIG. 4B

FIG. 4C

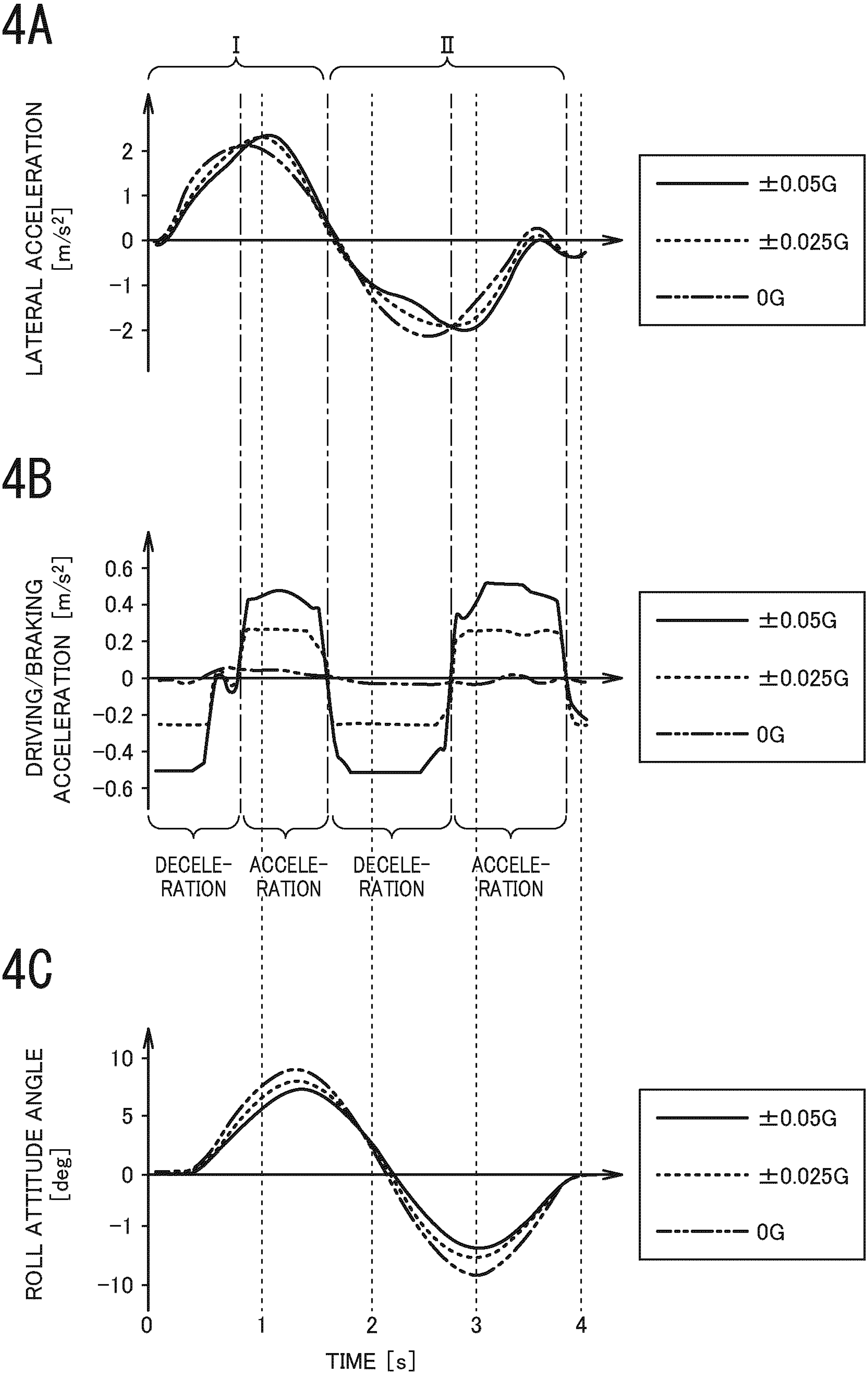

FIG. 5

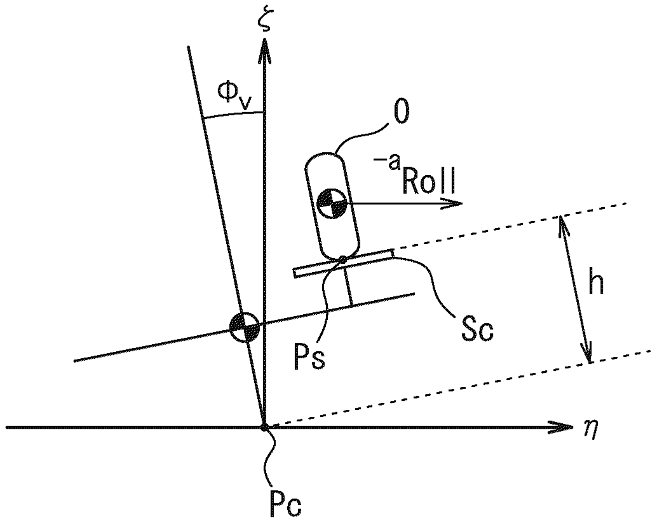


FIG. 6A

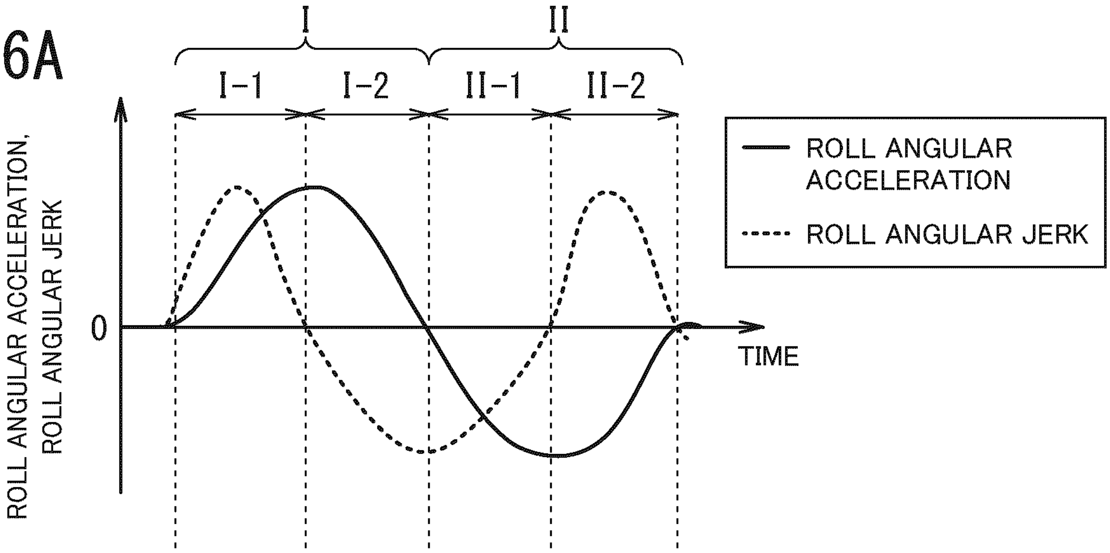


FIG. 6B

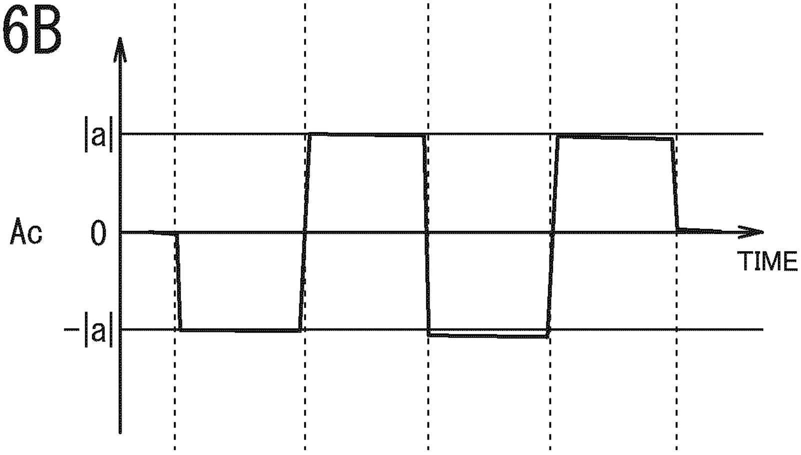

FIG. 7

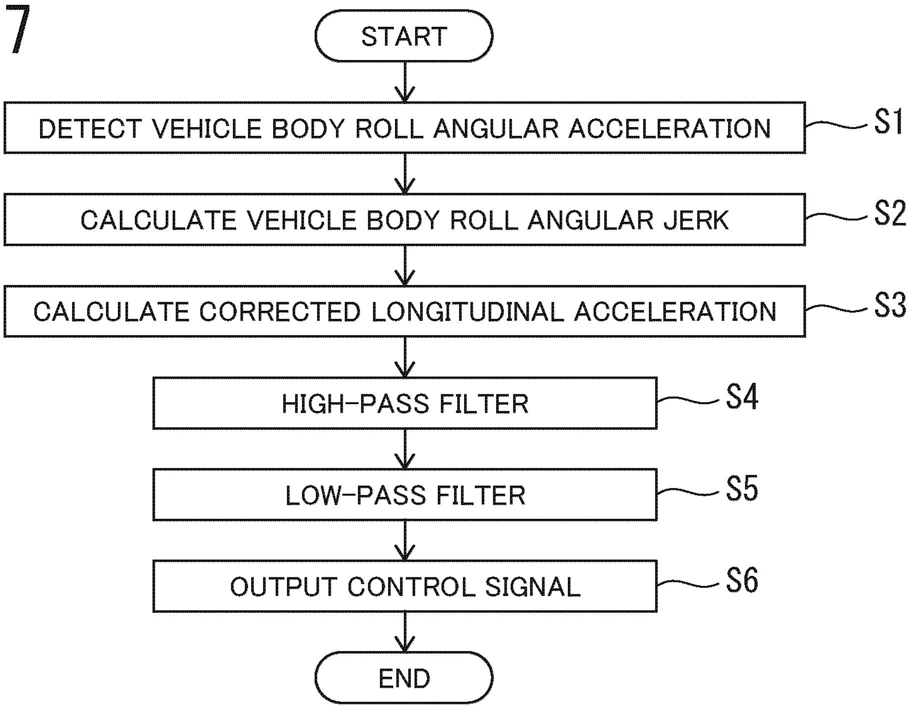


FIG. 8A

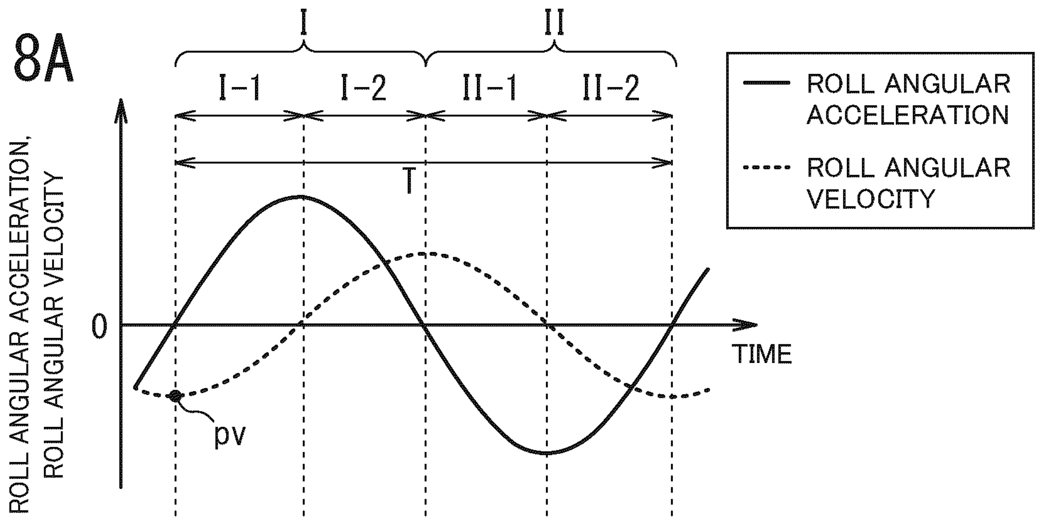


FIG. 8B

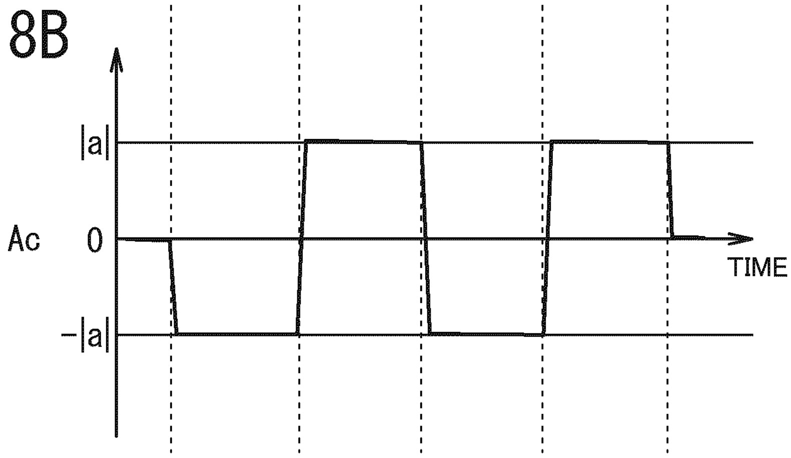

FIG. 9

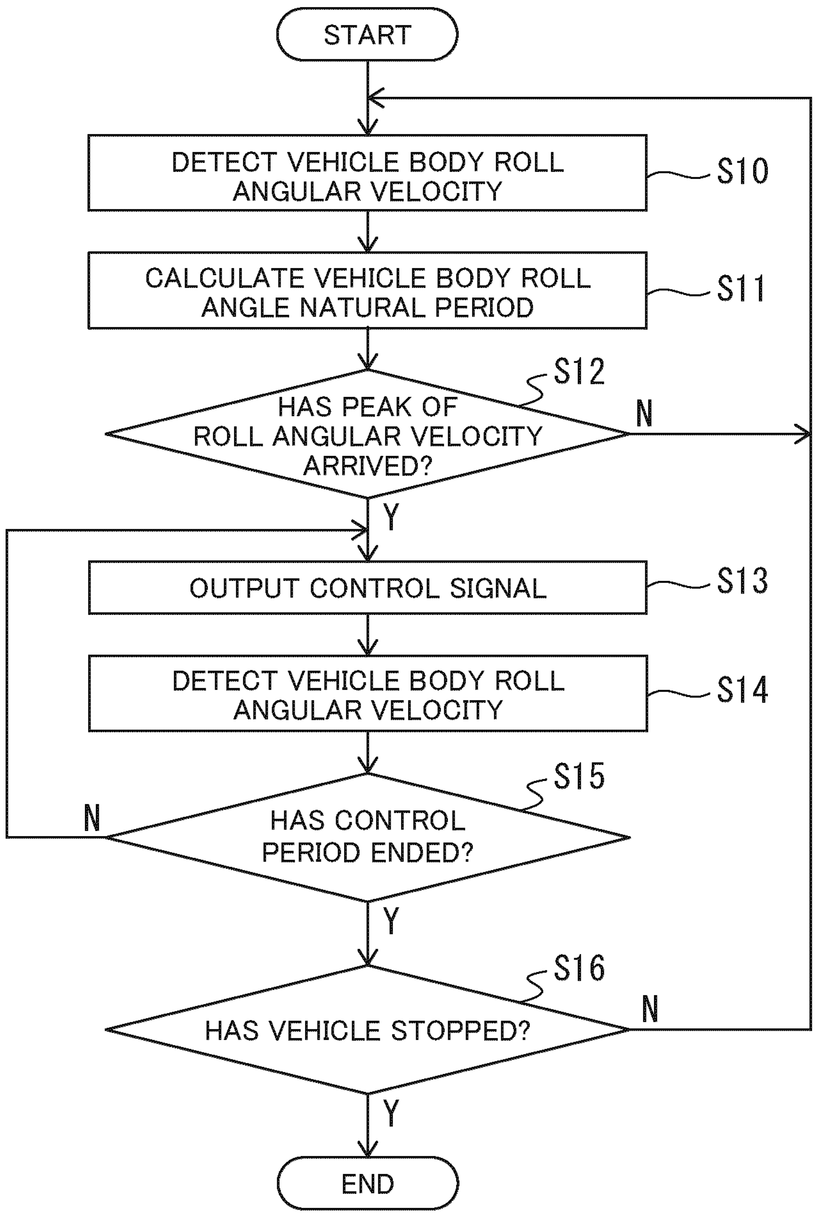
START
DETECT VEHICLE BODY ROLL ANGULAR VELOCITY
S10
CALCULATE VEHICLE BODY ROLL ANGLE NATURAL PERIOD
S11
S12
HAS PEAK OF ROLL ANGULAR VELOCITY ARRIVED?
N
Y
OUTPUT CONTROL SIGNAL
S13
DETECT VEHICLE BODY ROLL ANGULAR VELOCITY
S14
S15
N
HAS CONTROL PERIOD ENDED?
Y
S16
N
HAS VEHICLE STOPPED?
Y
END

## INTERNATIONAL SEARCH REPORT

International application No.
**PCT/JP2022/001777**

**A. CLASSIFICATION OF SUBJECT MATTER**

***B60W 30/045***(2012.01)i
FI: B60W30/045

According to International Patent Classification (IPC) or to both national classification and IPC

**B. FIELDS SEARCHED**

Minimum documentation searched (classification system followed by classification symbols)

B60W10/00-10/30; B60W30/00-60/00; G08G 1/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-239115 A (HONDA MOTOR CO LTD) 09 October 2008 (2008-10-09) paragraphs [0030]-[0044], [0060], fig. 1-2 | 1, 6 |
| A | paragraphs [0030]-[0044], [0060], fig. 1-2 | 2-5 |
| Y | JP 2008-162555 A (TOYOTA MOTOR CORP) 17 July 2008 (2008-07-17) paragraphs [0011]-[0051], fig. 1-6 | 1, 6 |
| A | JP 11-11272 A (MITSUBISHI MOTORS CORP) 19 January 1999 (1999-01-19) entire text, all drawings | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/001777**

| Patent document cited in search report | Publication date (day/month/year) | Patent family member(s) | Publication date (day/month/year) |
|---|---|---|---|
| JP 2008-239115 A | 09 October 2008 | (Family: none) | |
| JP 2008-162555 A | 17 July 2008 | (Family: none) | |
| JP 11-11272 A | 19 January 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013046172 A